# EUROPEAN PATENT SPECIFICATION

(11) **EP 4 210 842 B1**
(45) Date of publication and mention of the grant of the patent: **28.01.2026**
(21) Application number: 20953481.7
(22) Date of filing: 11.09.2020
(51) Int. Cl.: A63B 43/00, G01V 15/00, G06K 19/073, G06K 19/077, G09B 19/00, A63B 59/70, A63B 60/46, A63B 67/14, G06K 7/10, A63B 24/00, A63B 102/14, A63B 102/18, A63B 102/22, A63B 102/24, H04Q 9/00

(54) **INTELLIGENT SPORTS EQUIPMENT SYSTEMS AND METHODS**
INTELLIGENTE SPORTGERÄTESYSTEME UND VERFAHREN
SYSTÈMES ET PROCÉDÉS D'ÉQUIPEMENT SPORTIF INTELLIGENT

(43) Date of publication of application: 19.07.2023
(73) Proprietor: Helios Hockey, Portsmouth, New Hampshire 03801 (US)
(72) Inventor: NEAR, William G., Portsmouth, New Hampshire 03801 (US)
(74) Representative: Appleyard Lees IP LLP
(86) International application number: PCT/US2020/050499
(87) International publication number: WO 2022/055498

(56) References cited:
- WO-A1-2008/085068
- US-A1- 2009 017 944
- US-A1- 2011 230 276
- US-A1- 2015 054 632
- US-A1- 2015 057 111
- US-A1- 2018 193 694
- US-A1- 2018 243 633
- US-A1- 2018 243 633
- US-A1- 2018 290 043
- US-A1- 2018 290 043
- US-B2- 9 251 458

## Description

### FIELD OF THE INVENTION

The present invention relates generally to the tracking and analysis of various information associated with sports such as ice hockey, including how a player handles a puck and a stick.

### BACKGROUND OF THE INVENTION

One of the current ways to track the speed of a hockey puck is to use a laser or radar gun that is laid out on the ice. These current methods are limited as to the amount of information that can be obtained when a player hits a hockey puck and can also be cumbersome to setup. The present application seeks to advance such methods and systems to better track information associated with the speed and handling of a hockey puck by a given player, as well as analyze said information.

US20180290043A1 discloses a data-collecting play object, system and method.

### SUMMARY OF THE INVENTION

According to the present invention there is provided a system and method as set forth in the appended claims. Other features of the invention will be apparent from the dependent claims, and the description which follows.

### BRIEF DESCRIPTION OF THE DRAWINGS

The foregoing and other objects, features, and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.
FIG. 1 illustrates a smart hockey puck system;
FIGs. 2A-E illustrate various flow charts of processing data associated with a smart hockey puck or smart ball;
FIGs. 3A-B illustrates a smart hockey puck with embedded electronic board, sensors, antenna, and transceivers for detecting, processing information associated with said puck and surrounding objects;
FIGs. 3C-D illustrates a block diagram of the embedded electronic board of FIGs. 3A-B.
FIGs. 4A-C illustrate the arrangement of RFID tags across the blade portion of a hockey stick;
FIGs. 5A-D illustrate various embodiments of applying or embedding RFID tags and associated layers in or about the blade portion of a hockey stick;
FIGs. 6A-E illustrate a hockey player utilizing a hockey stick with RFID tags and a smart hockey puck, with detection and analysis being monitored and processed at various positions;
FIGs. 7A-B illustrate a ball with embedded electronics for use in other sports such as field hockey or lacrosse;

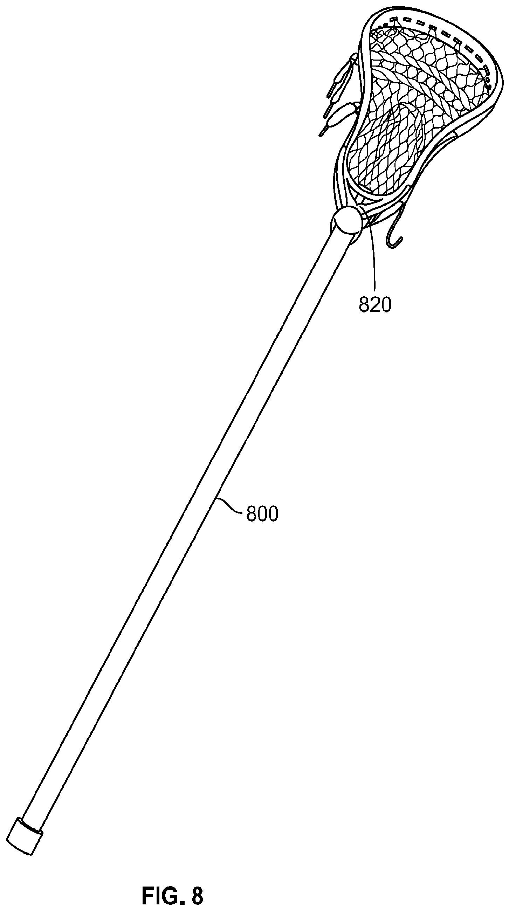

FIG. 8 illustrates a lacrosse stick with an embedded RFID tag for registration with the smart ball of FIGs. 7A-B.

### DETAILED DESCRIPTION OF THE INVENTION

As noted in the background section, one of the purposes of the present embodiments is to provide intelligent sports equipment systems and methods that function like real sports equipment and can process data in real-time, without the need for bulky or cumbersome techniques, such as placing a radar or laser gun in a certain part of a hockey rink to determine the speed of the hockey puck. Such previous methods are limited in the amount of information that is provided and the scope about which information can be provided. For example, it is not feasible to place radar or laser gun on the ice rink during live action as multiple players are constantly skating around, and thus triggering or crossing the radar or laser gun fields making it very difficult to determine whether the puck or player crossed over. It is one thing to track the speed of a hockey puck from a single player shooting on goal, but in order to track that in live action using current technology is difficult. This applies to other sports such as field hockey and lacrosse, but the applications can be implemented beyond these mentioned types of sports games. Thus, the present systems and methods were developed to solve these and other problems in current tracking and analysis technology.

For purposes of the embodiments described herein the term processing with respect to the electronic boards and circuitry can include: running calculations on data, recording data, logging data, analyzing data, and receiving or transmitting data. The term RFID tags can be interchanged with RFID chips, RFID transceivers, and RFID transmitters. The terms puck or ball are meant to be a subset of a variety of sports equipment, for example ball can refer a number of types and styles of balls used in sports. The terms stick or racket are also meant to be a subset of a variety of sports equipment, for example stick can refer to hockey stick, field hockey stick, lacrosse stick, baseball bat, and so forth.

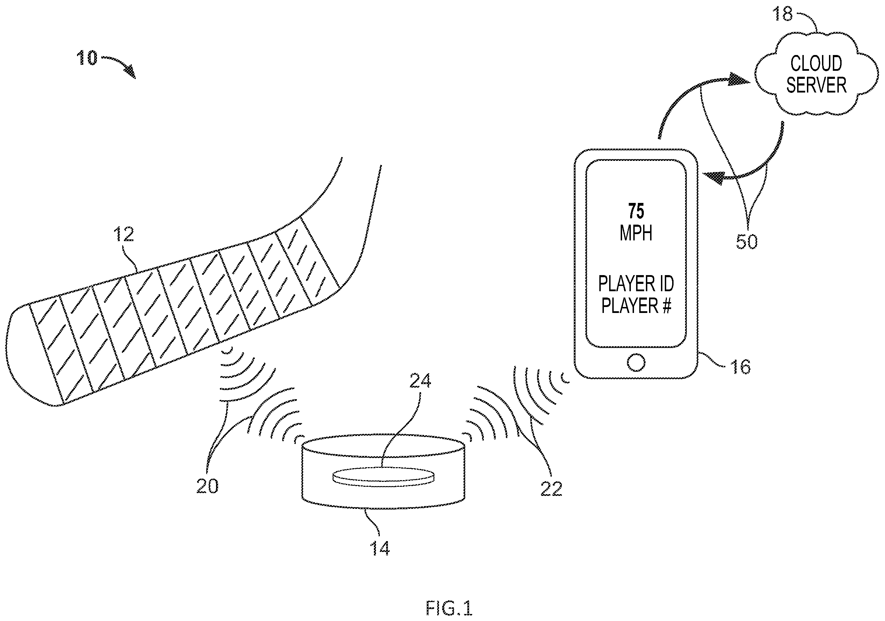

Fig. 1 illustrates an embodiment of a smart hockey puck system 10 which is comprised of hockey stick 12 having associated RFID transceiver(s), smart hockey puck 14, computing device 16, and remote or cloud-based server 18. One or more RFID tags can be attached to a portion of the blade of hockey stick 12. This allows for certain amount of wireless communication 20 between the hockey stick 12 and the smart hockey puck 14. For example, when the smart hockey puck 14 comes within proximity of or contact with the hockey stick, the smart hockey puck can register that it is within a certain proximity of a particular hockey stick. As further shown in Fig. 1, smart hockey puck 14 can also wirelessly communicate 22 with a computing device 16, such as a smartphone, tablet, smartwatch, laptop, desktop and the like. Depending on computing power, data and so forth, the computing device 16 can transfer via network 50 information to be processed on a remote server or cloud-based server 18. Resulting and historical information can then be relayed back to the computing device 16 and displayed in various formats for further analysis. Such information can be valuable for players, coaches, scouts and so forth.

As mentioned above, the registering event can trigger a processing event in the smart hockey puck 14, which information can be relayed through computing device 16 to be processed and stored in the cloud 18 for later retrieval by computing device 16. For example, if player #99 associated with a unique-identified hockey stick stops the smart hockey puck, the smart hockey puck 14 can process or record that player #99 has just stopped the smart hockey puck or alternatively can register that the next set of actions associated with the smart hockey puck 14 are to be associated with player #99 and trigger the smart hockey puck to process or record and associate the next set of actions (data) with player #99's profile. If after player #99 stops the smart hockey puck, he/she then takes a slapshot, the impact, speed, timing, rotation, direction and other processable or recordable data associated with the smart hockey puck can then be processed and associated with player #99's profile. If the smart hockey puck is then recovered by player #88, who is associated with another unique-identified hockey stick, the smart hockey puck can then register and begin processing the next set of data to be associated with player #88's profile. This example extends to other interactions between smart hockey puck 14 and hockey stick 12 including shooting, stickhandling, passing and so forth.

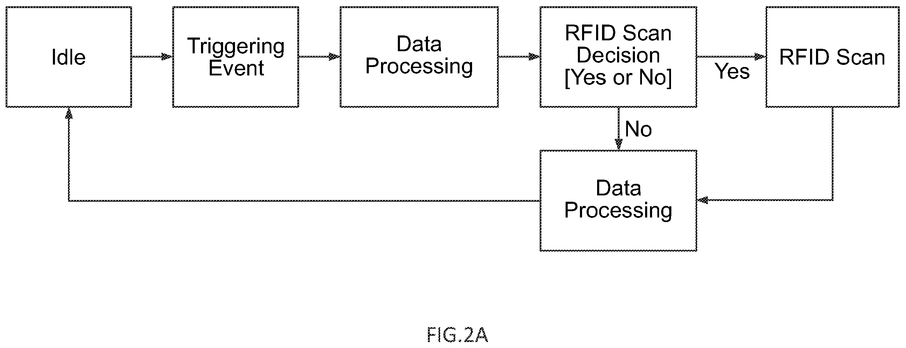

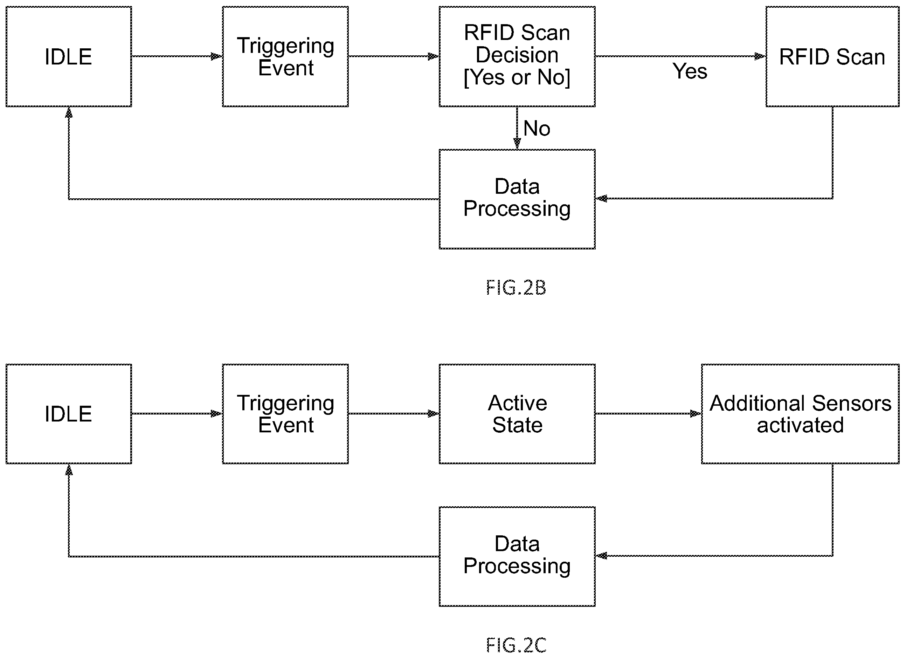

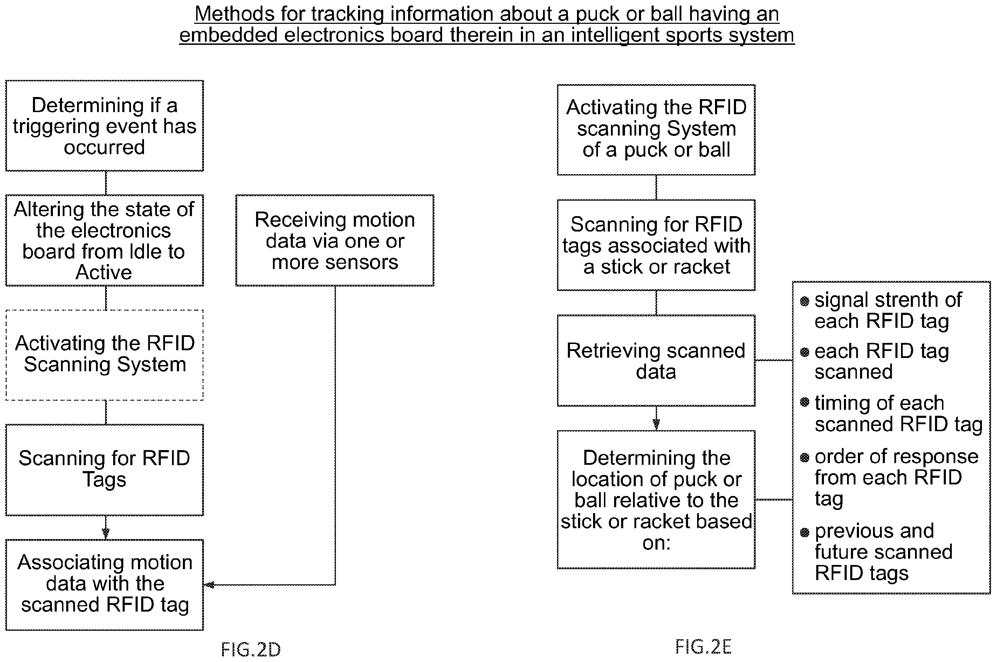

There are multiple actions that can trigger data associated with the smart hockey puck to be processed. Fig. 2A illustrates one method having a set of triggering events and the associated processing of data as a result of the triggering event. The flow chart shown illustrates the smart hockey puck initially in an idle state. The idle state can be a low-power or sleep state where only a limited number of sensors or transmitters are operating until a triggering event occurs, often used to conserve battery life, which upon triggering can turn on additional sensors and transmitters associated with the smart hockey puck. In this flow chart, when motion is detected the smart hockey puck changes from an idle state to an active state, where data is processed. This processed data can be used to calculated performance metrics, be recorded, transmitted or alternatively can simply be tracked until another triggering event occurs. Further in the flow chart a decision box illustrates whether an RFID scan is to occur. In other words, should the smart hockey puck begin scanning for nearby RFID tags or should the smart hockey puck simply continue processing data. If a RFID scanning event is triggered and a nearby RFID tag is detected, then data processing can now be associated with the information associated with that RFID tag as mentioned above, which can include data processing before and/or after the RFID scanning event. At the end of the data processing the smart hockey puck returns again to an idle state, waiting for a new triggering event to occur.

The smart hockey puck can operate in a variety of modes, as one skilled in the art upon reading these embodiments can appreciate and as illustrated in the example flow charts shown in FIGs. 2B-E, which demonstrate triggering the electronics board to go from an idle to an active state, as well as the RFID scanning system coupled to the electronics board, associating motion data with RFID tags that are on stick or racket associated with a particular player and determining where the puck or ball touched or interacted with the stick or ball. Further examples include, the smart hockey puck can always be processing data, or it can process data upon the triggering of certain events such as detecting motion or detecting a nearby RFID tag. The smart hockey puck can be remotely operated from another wireless computing device or operate on rules associated with time, which could also be considered triggering events. Such rules could include powering down or refusing to log before/after a certain time. Going idle between events after a predetermined period of time has passed, such as 2, 3, 5, or 10 seconds or longer has passed.

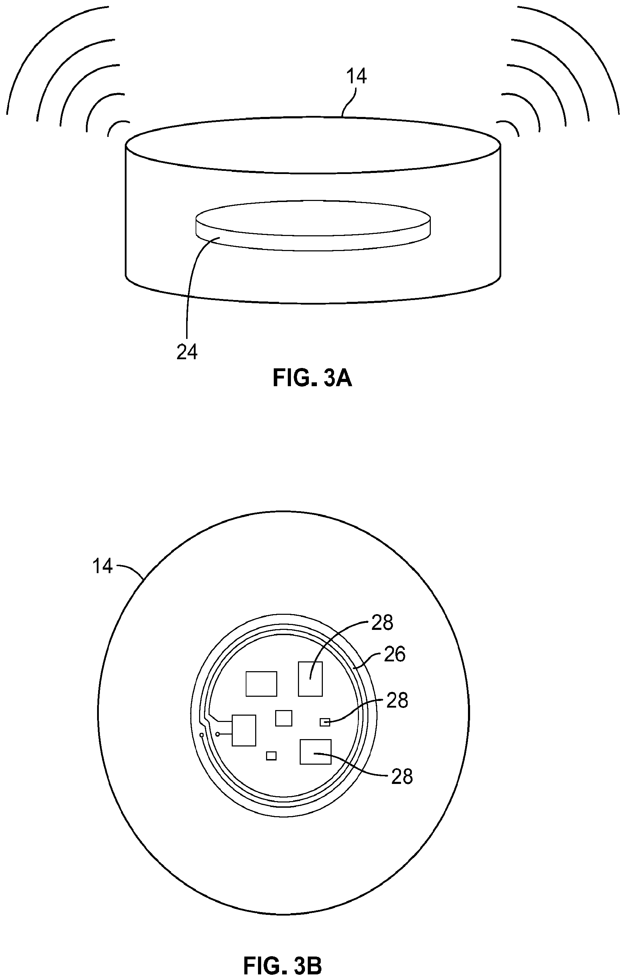

FIGs. 3A-B illustrate the smart hockey puck with an embedded electronics board 24 disposed inside thereof. The electronics board 24 can include an RFID antenna 26 and various electronic components 28. The antenna 26 as shown, is in a circular pattern, which enables for omnidirectional signals to be emitted and received. The electronic components 28 can include: batteries, accelerometers, wireless transceivers ((i.e. Bluetooth, BLE, RFID, NFC, GPS), gyroscope sensors, magnetometer sensors, IMUs, processing chips, microcontrollers, memory, charging ICs, magnets, and other various components to enable the intercommunication and functionality between the various sensors, processing and memory components, power conditioning and charging, as well as transmitting and receiving information to and from the smart hockey puck.

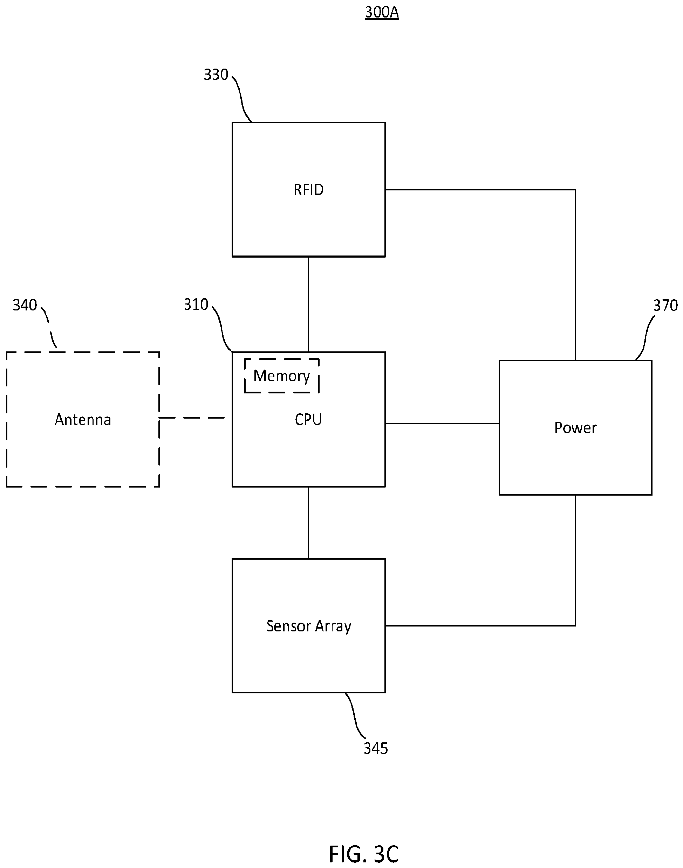

FIG. 3C illustrates one embodiment of a block diagram 300A of the electronics board 24, which includes CPU 310 having internal memory, RFID block 330 (including an RFID interface), sensor array 345, power management block 370, and optional antenna 340. In the configuration with the optional antenna, information received by the sensor array and RFID block could be recorded to memory in CPU 310 and later transmitted via the antenna of the RFID block 330. Power can be supplied to the sensor array 345, CPU 310 and RFID block 330.

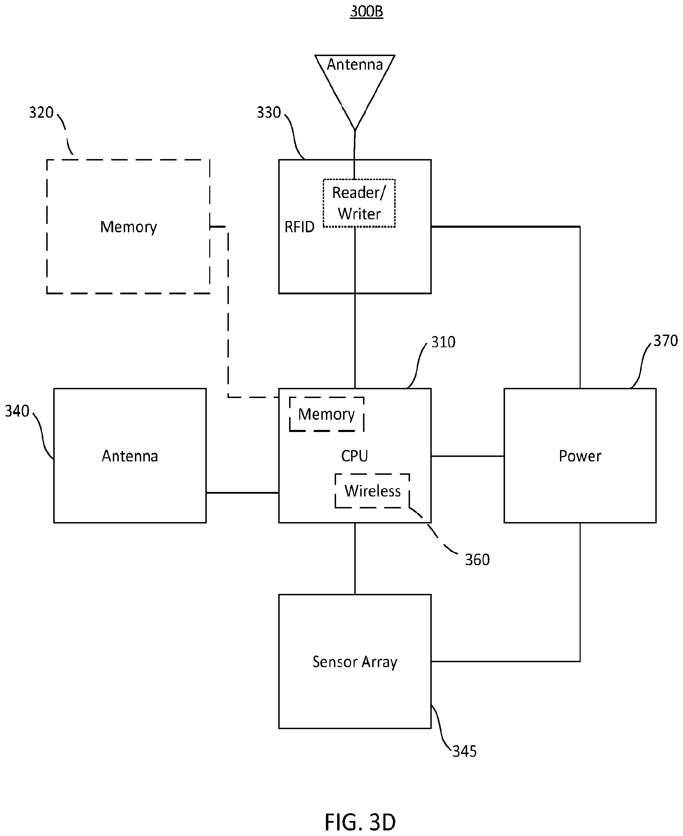

FIG. 3D illustrates another embodiment of a block diagram 300B of the electronics board 24. Block diagram 300B includes a CPU or processor 310 having internal memory, and an optional separate memory 320 unit which can communicate with CPU 310, which receives power from the power management block 370, receives data from sensor array 345 and is connected with antenna 340, as well as RFID block 330, which can include reader and/or writer functions and an antenna. Antenna 340 can be used to communicate with computing device 16 directly. As discussed above in the electronic components 28 the sensors in the sensor array 345 can include many of the same types of sensors including motion sensors (i.e. MEMS) and temperature sensors. The number of sensors is not limited to one or two, but can be as many as desired and the lists provided are meant to be exemplary and not exhaustive. The wireless block 360 can be integrated into the CPU 310, which includes hardware and firmware protocols to allow various types of wireless communication including Bluetooth and Wi-Fi. Thus, enabling the smart hockey puck to communicate to an external computing device 16 or even the cloud server 18. The power management block 370 can include a power source, such as a battery, power management controls and charging controls for both conductive and wireless charging.

It should be noted that the embodiments herein can utilize both wireless charging and DC charging, where the conductive portions (not shown) are formed on an outer surface of the smart hockey puck, or a port (not shown) is formed for a wired charging method.

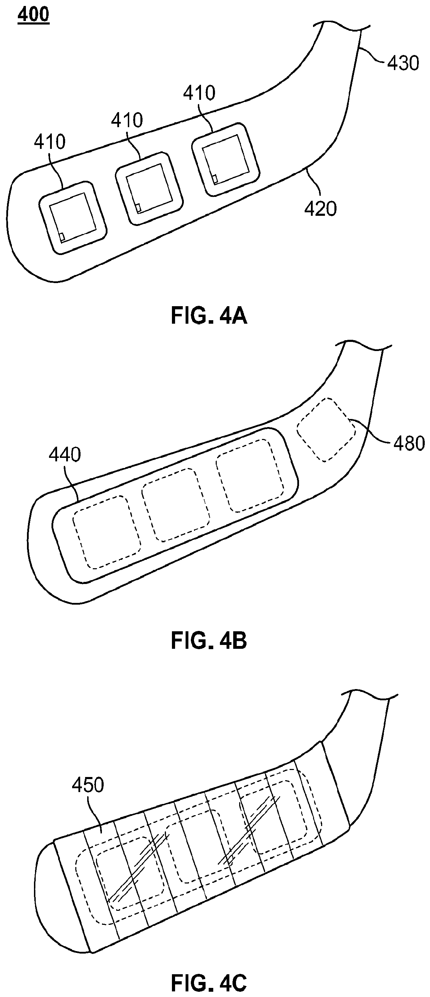

FIGs. 4A-C illustrate an arrangement 400 of RFID tags 410 across the blade portion 420 of a hockey stick 430. In Fig. 4A three RFID tags 410 are spaced across the surface of hockey blade portion 420. As the smart hockey puck approaches and gets within proximity it can read one or more of the RFID tags 410. In some embodiments, which RFID tags were read, the timing, order of response, or signal strength can determine which portion of the hockey blade the hockey puck made contact with. The smart hockey puck can determine location when only one tag response is received by the smart hockey puck, through corresponding the contact with the physical position of the blade where the single RFID tag resides. When multiple tag responses are received, the smart hockey puck can use the timing, order of response, signal strength, previous RFID reads or future RFID reads to determine the contact location more accurately. This kind of information can help with training purposes.

For example, if the smart hockey puck reads the tags on a hockey stick multiple times in a row, the last set of reads prior to releasing a slap shot, could be the position where the contact with the smart hockey puck and the hockey stick occurred at the time of departure of the puck from the blade for the slap shot.

Fig. 4B illustrates an adhesive-backed label 440 or sticker with integrated RFID tags to help them stay in place and provide a protective covering for the RFID tags 410. Traditional hockey tape 450 can be wrapped around the blade portion 420 and cover the adhesive cover 440. It should be noted the RFID tags 410 can be of several varieties including passive, battery-assisted passive and active, which include transponders and beacons. The frequencies that these RFID tags operate include low frequency (LF), high frequency (HF) and ultra-high frequency (UHF). The limitations and uses of each type are understood by those in the art. The embodiments described herein can utilize the various types as well. For example, if the RFID tag is an active transponder, then the smart hockey puck can operate in a read mode. If the RFID tag is a passive version, then the smart hockey puck can emit a signal that powers the RFID tag in order to send a response that is then received by the smart hockey puck. When a tag is closer to the smart hockey puck (or alternatively a smart ball), it will power up faster due to the better coupling of the RF energy from the smart puck or smart ball.

An identification tag 480 can be placed at various positions on the hockey stick 430 including part of the adhesive-backed label or sticker 440. The identification tag could be a barcode, QR code, alphanumeric code, wireless transmitter and so forth. The purpose of the identification code is to provide a means for quickly identifying a given hockey stick with a player or rather player profile. For example, a player profile can be created and viewed on computing device 16, which could have a QR code reader. The computing device 16, such as a smartphone or tablet, could be used to scan the QR code where the information associated with that QR code, such as the information associated with each of the RFID tags, can now be input into the player profile. As that player uses that hockey stick and interacts with a smart hockey puck, the system can then match the appropriate data with the player's profile. In this manner, a hockey stick could be used by multiple players and the information sorted by scanning the QR code before each player uses the hockey stick. It should readily be recognized from this example how other types of identification tags could be used in a similar manner to achieve the same purpose, which is to associate the correct information with the appropriate player or player profile.

For clarity it should also be understood that a hockey stick associated with a particular hockey player could interact with multiple smart hockey pucks. Thus, data associated with multiple smart hockey pucks could be received into the particular hockey player's profile for viewing and analysis. For example, a training scenario could exist where the particular hockey player is practicing slapshots on goal, and hits 30-40 smart hockey pucks at the goal. The data from each of these smart hockey pucks would be associated with the particular hockey player using the same hockey stick and received into the player profile.

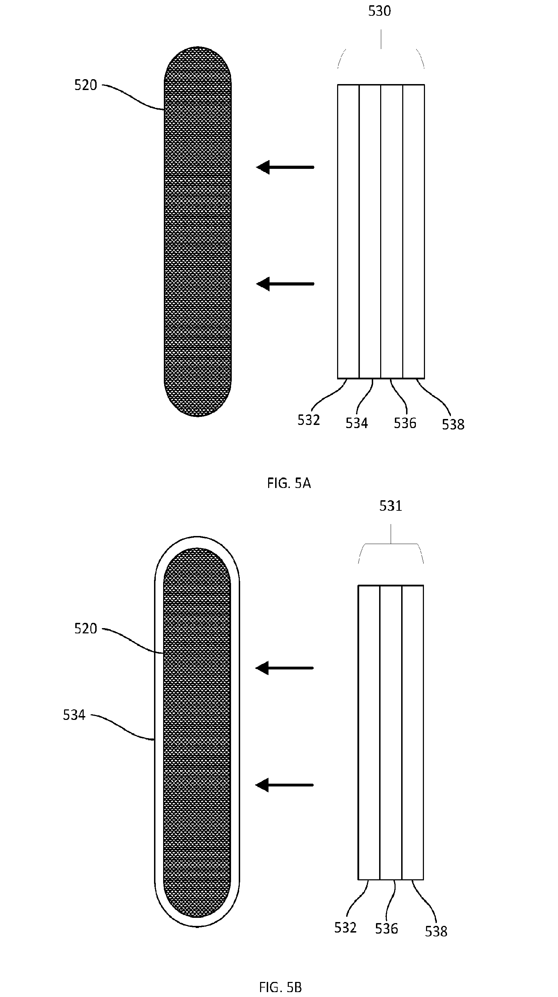

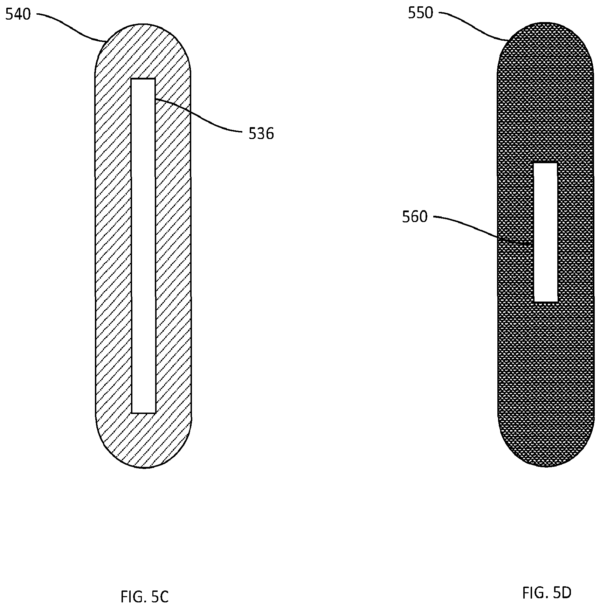

FIGs. 5A-D are illustrations of additional embodiments of attaching and/or embedding RFID tags onto a hockey stick. For example, as shown in FIG. 5A, a cross-sectional view of hockey blade portion 520 is shown and a multi-layered label 530 comprised of adhesive layer 532, ferrite layer 534, RFID inlay layer 536, and cover or padding layer 538. The multi-layer label 530 can be attached to one or both the front and back portions of the hockey blade. A slightly different configuration is shown in FIG. 5B where a ferrite layer is coated around the hockey blade portion 520 leaving the multi-layer label 531 with three layers: adhesive layer 532, RFID inlay layer 536, and the cover or padding layer 538. In yet another embodiment, shown in FIG. 5C, the RFID inlay 536 is disposed or embedded in the hockey blade portion 540. It should be noted the RFID inlay includes an antenna and integrated circuit (IC). A variant to this is found in FIG. 5D where an RFID IC 560 is embedded in a hockey blade portion 550 and where hockey blade portion 550 is formed of a material(s) configured to act as an antenna for the RFID IC 560.

Hockey stick and blades in particular, can be made from a variety of materials. One type of material used could be certain blends of carbon fiber. Certain types of Carbon Fiber can be very conductive and as a result cause interference with RFID tags. For this reason, it may be necessary to provide a ferrite layer, so as to minimize the interference from the blade material, so that the RFID tag(s) placed thereon can receive and transmit optimally. This interference can come in the form of radiation absorption, electrical conductivity, electromagnetic field interference and so forth. Though embodiments shown in FIGs. 5A-D could also be modified with these principles in mind to include additional adhesive layers, additional layers configured to optimally assist with receiving and directing signals, additional protective layers to for the critical components, such as the RFID IC, antenna or power source, and additional cover layers for aesthetic purposes. Other materials used include wood, laminates, epoxy, Kevlar, plastics, and so forth, with each type of material having its own set of insulative or conductive properties, thus the need for a multi-layered label 530, 531 , or other version to be optimized accordingly.

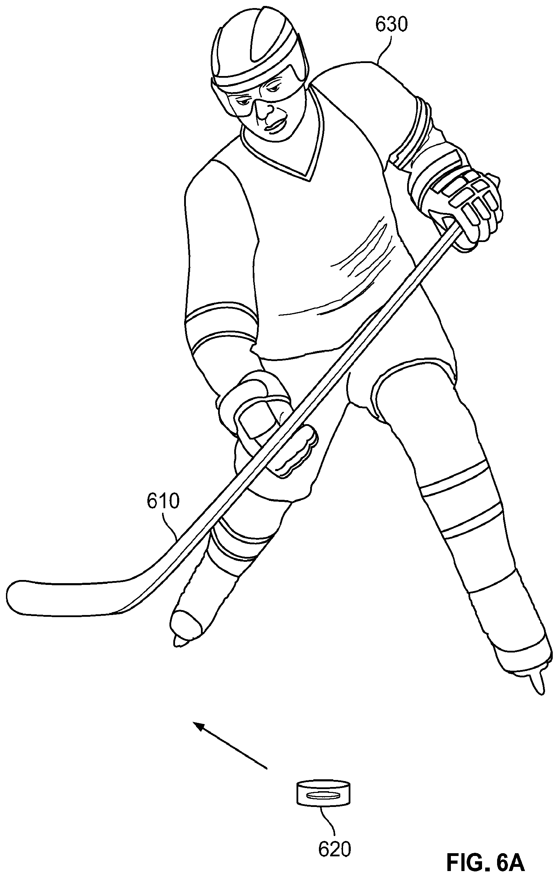

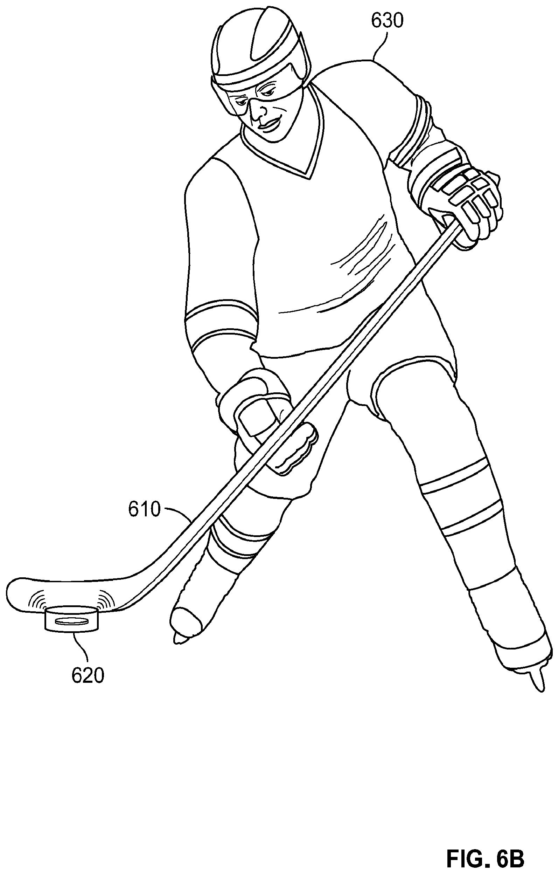

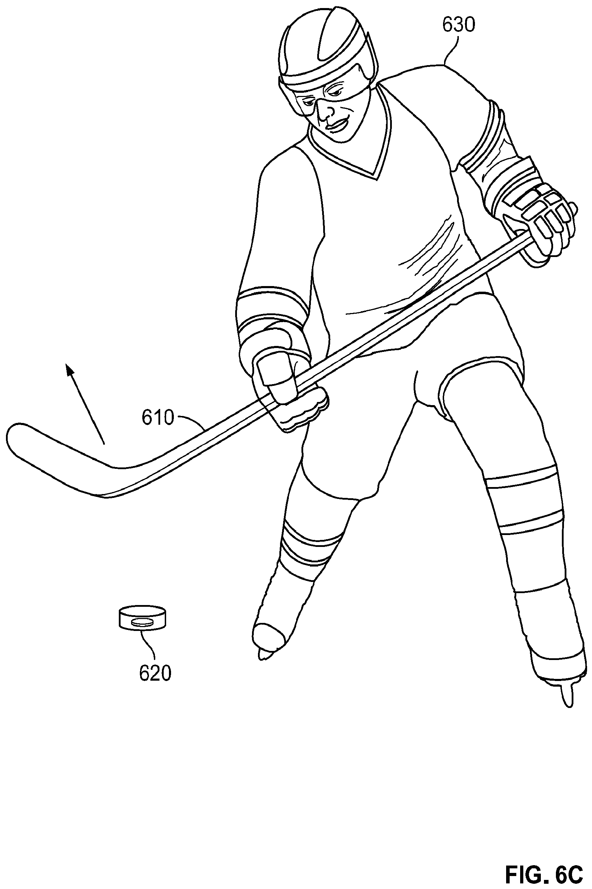

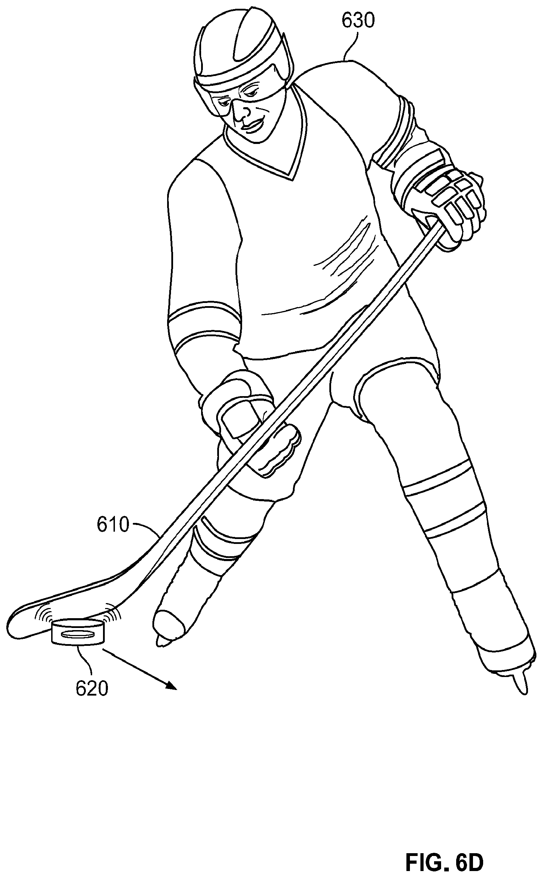

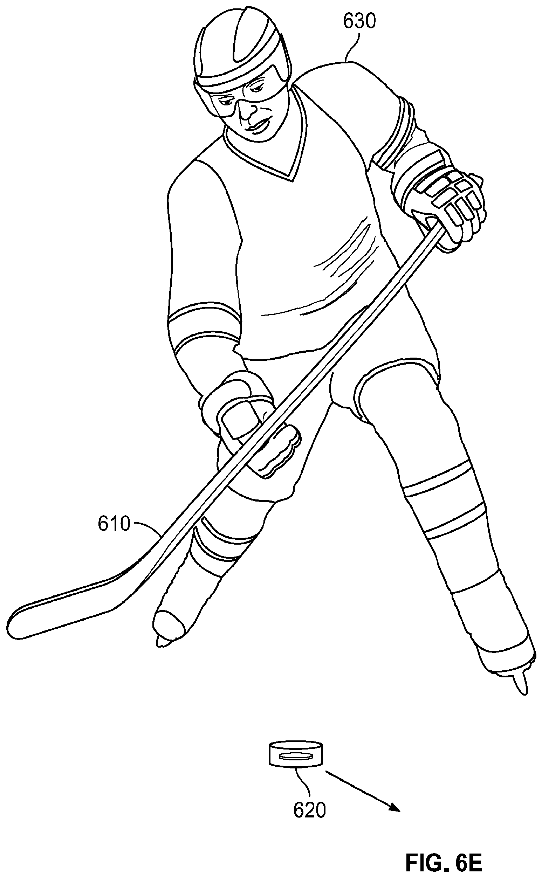

FIGs. 6A-E illustrate a hockey player 630 utilizing a smart hockey system 600 including a hockey stick 610 with RFID tag(s) and a smart hockey puck 620. Where the system 600 is configured to process and analyze the smart hockey puck 620 at various positions and in relationship to the hockey stick 610. In FIG. 6A, the smart hockey puck is traveling towards the hockey player 630. The speed, direction and angle of this can be processed or recorded by the smart hockey puck. In FIG. 6B the smart hockey puck comes into contact or close proximity of the hockey stick 610, such that the smart hockey puck 620 can read the RFID tag(s) associated with hockey stick 610. Prior or future data processed from the sensors associated with smart hockey puck 620 can be processed and associated with the information associated with the RFID tag(s) of hockey stick 610, such as the player stopping the puck. FIG. 6C illustrates the hockey player 630 winding up to hit the smart hockey puck. FIG. 6D illustrates the hockey player 630 striking the smart hockey puck with hockey stick 610 where impact information can be processed along with the information shown in FIG. 6E where the smart hockey puck is sent in a new direction, at a new speed and angle.

It should be noted and as mentioned above, that a triggering event can be a number of actions, such as changes in motion, impact, detection of RFID tags, timing and can also include previous interactions and estimations. For example, in Fig. 6A as noted the puck is coming towards the player. Prior to receiving the puck, the puck may have interacted with another player, which the puck registered and associated a set of motion data with that player. Once the previous player passes or shoots the puck, the electronics board can be configured to detect that a change in motion or direction has occurred that may be indicative of a pass and therefore become a triggering event to again start the scanning system comprised of an antenna configured to read RFID tags. Once the new player, such as in FIG. 6B, receives the puck the scanning system can register a new set of motion data to be associated with the player receiving the puck. Once a positive scanning and detection event has occurred the scanning system, can then power back down until another triggering event occurs. However, motion data, such as that shown in FIGs. 6C-E can still be processed or recorded. The final motion in 6E can then indicate a possible new triggering event for the scanning system to be activated again.

This triggering event of anticipating the puck changing players, can also be used to enable the scanning system to begin scanning for various signal strengths, so as to be able to determine the position the puck interacts with the receiving players stick. If the motion data indicates the receiving player is beginning to skate with the puck, it can allow the scanning to maintain a scanning mode to continue to receive signal strength from the RFID tags on skating hockey player's stick. This information can then be processed and transferred, where an analysis or viewing of where the puck interacts with that particular player's hockey stick. For example, whether that player uses more of the toe, middle or heel portion of the blade portion of the hockey stick and how that differs from the front of the blade to the back of the blade.

One of the ways to associate the RFID tags with a player is to input into a player profile the information associated with each of the RFID tags. For example, a QR code could be placed on the hockey stick and have information associated with respect to each of the RFID tags. The QR code could be scanned and that information imported into the player's profile.

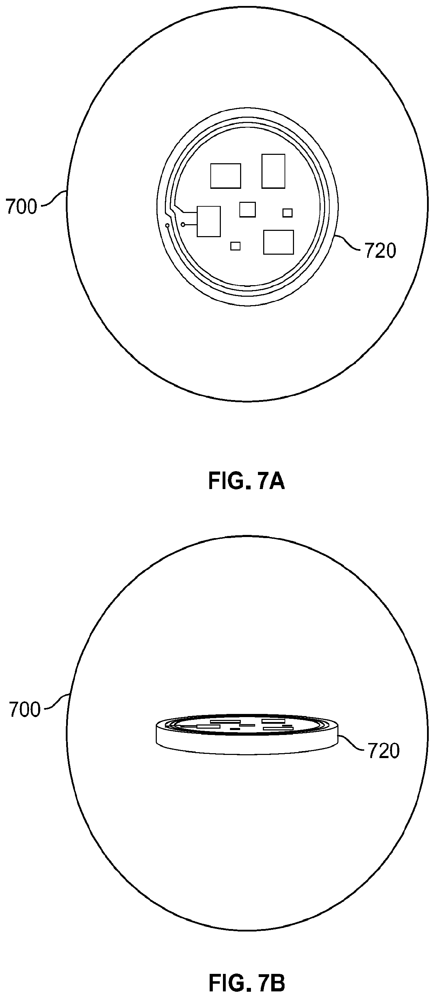

The above examples and embodiments have primarily dealt with the sport of ice hockey. However, and as mentioned, the solutions provided herein can be applied to other sports as well. FIGs. 7 A -B illustrate various views of a smart ball 700 that has an embedded circuit board 720 provided therein. Similar to above, the embedded circuit board 720 can have a plurality of antennae, sensors, power, microprocessors and so forth as previously discussed. The smart ball 700 can be used with smart lacrosse stick 800 with an associated RFID tag 820 disposed thereon (or alternatively embedded therein). Similar to the hockey example, the smart ball 700 can register the RFID tag 820, which can be associated with player and player profile where processed data can be received from the smart ball entered and analyzed using a computing device and/or a cloud-based or remote server. The smart ball could be used in field hockey, polo, golf, tennis, bowling, and a variety of other sports. FIG. 7A-B are not embodiments of the claimed invention however.

It should also be readily understood that RFID chips, tags, or sensors can be placed in other places. For example, an RFID tag can be placed in the glove of a goalie, on the goal itself, on a player's clothing. Several chips or tags can be placed along the baseline of a rink, stadium or field, and as the puck makes contact or gets close to the baseline boards around the rink information can be read, stored and later transmitted from the puck or ball. Usually the RFID tag(s) are placed in a spot where the ball or puck or going to come in contact with another piece of sports equipment.

As mentioned, the computing device 16 can include a software application that is configured to process and display raw or processed data from the smart hockey puck or smart ball. Some of the information can be received in a pre-processed state based on a particular sensed event. The computing device 16 can be also be in communication either wirelessly or directly networked to a remote server 18, which can be configured to access multiple databases, store additional information, and have additional processing capabilities. In this manner, the computing device 16 can be used as a means to transfer information via network 50 to the remote server 18 for analysis and receive the analyzed information to be displayed to a user via computing device 16.

It will be appreciated that the system 10 can include computer instructions located on a non-transitory computer-readable medium or memory which can be stored locally (on 16 and 24), or remotely (on 18) at a network location. Processing circuitry can then be utilized either locally, remotely, or both to process the sensed data associated with the hockey puck 14 in order to optimize for size, cost and battery life.

It should also be understood that although the preferred embodiments utilize wireless means to communicate data from the smart puck or ball to a computing device, this can be done via a direct connection as well, where ports are integrated into the puck or ball for the purpose of transferring data.

## Claims

1. A method for tracking information about a puck (14) in an intelligent sports system (10), the intelligent sports system (10) comprising:
a hockey puck (14) having an electronics board (24) embedded therein, wherein the electronics board (24) includes the following components: a processing unit (310), a memory, a plurality of sensors (345) for detecting motion along one or more axes, and at least one antenna (26) configured to read RFID tags (410);
and
a hockey stick (430) having a plurality of RFID tags (410) associated therewith and disposed along a blade portion (420) of the hockey stick (430), wherein the electronics board (24) of the puck (14) can read information from the RFID tags (410), and
wherein the electronics board (24) is configured to have an idle state and an active state, wherein during the idle state only a subset of the components is operating or at least some of the components are operating in a low power mode,
wherein the method comprises switching the electronics board (24) from the idle state to the active state when a triggering event is detected, and
wherein during the active state, the electronics board (24) is configured to activate the at least one antenna (26) and scan, by the at least one antenna (26) for RFID tags (410), and
upon identifying an RFID tag (410) to process motion data associated with the hockey puck (14) by reading signal strength of each of the RFID tags (410) along the blade portion (420) of the hockey stick (430), and to analyze the signal strengths to determine a portion of the blade portion (420) of the hockey stick (430) with which the hockey puck (14) has made contact; and
upon completing processing motion data, to return to the idle state.

2. The method of claim 1, wherein detecting the triggering event comprises detecting a sudden change in movement of the hockey puck (14).

3. The method of claim 1, comprising triggering the electronics board (24) embedded in the hockey puck (14) to associate information associated with the RFID tag (410) associated with the hockey stick (430) data with the processed motion data of the hockey puck (14), on the event of the hockey puck (14) coming in close proximity with the hockey stick (430).

4. The method of claim 1, wherein the motion data sensed includes one or more of direction, velocity, acceleration, angle, height, and impact force.

5. An intelligent sports system (10) comprising a hockey puck (14) and a hockey stick (430), the hockey puck (14) having an electronics board (24) embedded therein, wherein the electronics board (24) includes the following components: a processing unit (310), a memory, a plurality of sensors (345) for detecting motion along one or more axes, and at least one antenna (26) configured to read RFID tags (410); and the hockey stick (430) having a plurality of RFID tags (410) associated therewith and disposed along a blade portion (420) of the hockey stick (430), wherein the electronics board (24) of the puck (14) can read information from the RFID tags (410), and wherein the electronics board (24) is configured to have an idle state and an active state, wherein during the idle state only a subset of the components is operating or at least some of the components are operating in a low power mode, wherein the system is configured to perform the method of claim 1.

6. The intelligent sports system (10) of claim 5, further comprising a computing device (16) for receiving and displaying the processed data associated with the puck (14).

7. The intelligent sports system (10) of claim 5, further including a remote or cloud-based server (18) configured to receive, store and process data received from a computing device (16).

8. The intelligent sports system (10) of claim 5, further including a second antenna (340) for transmitting processed motion data wirelessly to a computing device (16).

9. The intelligent sports system (10) of claim 5, further including an identification tag (480) disposed on the hockey stick (430), wherein the identification tag (480) is configured to provide information associated with the RFID tag (410) associated with the hockey stick (430).

10. The intelligent sports system (10) of claim 9, wherein the identification tag (480) is one of a barcode, a QR code, or an alpha-numeric code, and wherein the identification tag can be scanned by a computing device (16) and associate the information associated with the identification tag (480) with a player profile.

11. The intelligent sports system (10) of claim 5, wherein the RFID tag (410) is a multi-layered label (530) comprising an adhesive layer (532), a ferrite layer (534), a RFID inlay layer (536) and a cover or padding layer (538).

12. The intelligent sports system (10) of claim 5, wherein at least one RFID tag (410) is mounted on a front portion of the hockey stick (430) and at least one RFID tag (410) is located on a rear portion of the hockey stick (430).

13. The intelligent sports system (10) of claim 5, wherein a ferrite layer (534) is coated around a blade portion (420) of the stick (430) and the RFID tag (410) is a multi-layered label (530) comprising an adhesive layer (532), an RFID inlay layer (536), and a cover or padding layer (538).

## Patentansprüche

1. Verfahren zum Verfolgen von Informationen über einen Puck (14) in einem intelligenten Sportsystem (10), wobei das intelligente Sportsystem (10) Folgendes umfasst:
einen Hockey-Puck (14) mit einer darin eingebetteten Elektronikplatine (24), wobei die Elektronikplatine (24) die folgenden Komponenten beinhaltet: eine Verarbeitungseinheit (310), einen Speicher, eine Vielzahl von Sensoren (345) zum Detektieren von Bewegung entlang einer oder mehrerer Achsen und zumindest eine Antenne (26), die dazu konfiguriert ist, RFID-Tags (410) zu lesen; und
einen Hockeyschläger (430) mit einer Vielzahl von RFID-Tags (410), die damit assoziiert und entlang eines Blattabschnittes (420) des Hockeyschlägers (430) angeordnet sind, wobei die Elektronikplatine (24) des Pucks (14) Informationen von den RFID-Tags (410) lesen kann, und
wobei die Elektronikplatine (24) dazu konfiguriert ist, einen Ruhezustand und einen aktiven Zustand aufzuweisen, wobei während des Ruhezustands nur ein Teilsatz der Komponenten arbeitet oder zumindest einige der Komponenten in einem Niedrigleistungsmodus arbeiten,
wobei das Verfahren Umschalten der Elektronikplatine (24) von dem Ruhezustand in den aktiven Zustand umfasst, wenn ein Auslöseereignis detektiert wird, und
wobei während des aktiven Zustands die Elektronikplatine (24) dazu konfiguriert ist, die zumindest eine Antenne (26) zu aktivieren und durch die zumindest eine Antenne (26) nach RFID-Tags (410) abzutasten und beim Identifizieren eines RFID-Tags (410) Bewegungsdaten assoziiert mit dem Hockey-Puck (14) zu verarbeiten, indem Signalstärke von jedem der RFID-Tags (410) entlang des Blattabschnittes (420) des Hockeyschlägers (430) gelesen wird, und die Signalstärken zu analysieren, um einen Abschnitt des Blattabschnittes (420) des Hockeyschlägers (430) zu bestimmen, mit dem der Hockey-Puck (14) in Kontakt gekommen ist; und nach Abschluss der Verarbeitung von Bewegungsdaten in den Ruhezustand zurückzukehren.

2. Verfahren nach Anspruch 1, wobei das Detektieren des Auslöseereignisses Detektieren einer plötzlichen Änderung der Bewegung des Hockey-Pucks (14) umfasst.

3. Verfahren nach Anspruch 1, umfassend Auslösen der Elektronikplatine (24), die in den Hockey-Puck (14) eingebettet ist, um Informationen, die mit dem RFID-Tag (410) assoziiert sind, das mit den Daten des Hockeyschlägers (430) assoziiert ist, mit den verarbeiteten Bewegungsdaten des Hockey-Pucks (14) zu assoziieren, wenn der Hockey-Puck (14) in unmittelbare Nähe zu dem Hockeyschläger (430) kommt.

4. Verfahren nach Anspruch 1, wobei die erfassten Bewegungsdaten eines oder mehrere von Richtung, Geschwindigkeit, Beschleunigung, Winkel, Höhe und Aufprallkraft beinhalten.

5. Intelligentes Sportsystem (10), umfassend einen Hockey-Puck (14) und einen Hockeyschläger (430), wobei der Hockey-Puck (14) eine darin eingebettete Elektronikplatine (24) aufweist, wobei die Elektronikplatine (24) die folgenden Komponenten beinhaltet: eine Verarbeitungseinheit (310), einen Speicher, eine Vielzahl von Sensoren (345) zum Detektieren von Bewegung entlang einer oder mehrerer Achsen und zumindest eine Antenne (26), die dazu konfiguriert ist, RFID-Tags (410) zu lesen; und der Hockeyschläger (430) eine Vielzahl von RFID-Tags (410) aufweist, die damit assoziiert und entlang eines Blattabschnittes (420) des Hockeyschlägers (430) angeordnet sind, wobei die Elektronikplatine (24) des Pucks (14) Informationen von den RFID-Tags (410) lesen kann, und wobei die Elektronikplatine (24) dazu konfiguriert ist, einen Ruhezustand und einen aktiven Zustand aufzuweisen, wobei während des Ruhezustands nur ein Teilsatz der Komponenten arbeitet oder zumindest einige der Komponenten in einem Niedrigleistungsmodus arbeiten, wobei das System dazu konfiguriert ist, das Verfahren nach Anspruch 1 durchzuführen.

6. Intelligentes Sportsystem (10) nach Anspruch 5, ferner umfassend eine Rechenvorrichtung (16) zum Empfangen und Anzeigen der verarbeiteten Daten, die mit dem Puck (14) assoziiert sind.

7. Intelligentes Sportsystem (10) nach Anspruch 5, ferner beinhaltend einen entfernten oder Cloud-basierten Server (18), der dazu konfiguriert ist, Daten, die von einer Rechenvorrichtung (16) empfangen werden, zu empfangen, zu speichern und zu verarbeiten.

8. Intelligentes Sportsystem (10) nach Anspruch 5, ferner beinhaltend eine zweite Antenne (340) zum drahtlosen Übertragen von verarbeiteten Bewegungsdaten an eine Rechenvorrichtung (16).

9. Intelligentes Sportsystem (10) nach Anspruch 5, ferner beinhaltend ein Identifikations-Tag (480), das an dem Hockeyschläger (430) angeordnet ist, wobei das Identifikations-Tag (480) dazu konfiguriert ist, Informationen bereitzustellen, die mit dem RFID-Tag (410) assoziiert sind, das mit dem Hockeyschläger (430) assoziiert ist.

10. Intelligentes Sportsystem (10) nach Anspruch 9, wobei das Identifikations-Tag (480) eines von einem Barcode, einem QR-Code oder einem alphanumerischen Code ist und wobei das Identifikations-Tag durch eine Rechenvorrichtung (16) abgetastet werden und die Informationen, die mit dem Identifikations-Tag (480) assoziiert sind, mit einem Spielerprofil assoziieren kann.

11. Intelligentes Sportsystem (10) nach Anspruch 5, wobei das RFID-Tag (410) ein mehrschichtiges Etikett (530) ist, das eine Klebeschicht (532), eine Ferritschicht (534), eine RFID-Einlageschicht (536) und eine Abdeck- oder Polsterschicht (538) umfasst.

12. Intelligentes Sportsystem (10) nach Anspruch 5, wobei zumindest ein RFID-Tag (410) an einem vorderen Abschnitt des Hockeyschlägers (430) montiert ist und sich zumindest ein RFID-Tag (410) an einem hinteren Abschnitt des Hockeyschlägers (430) befindet.

13. Intelligentes Sportsystem (10) nach Anspruch 5, wobei eine Ferritschicht (534) um einen Blattabschnitt (420) des Schlägers (430) beschichtet ist und das RFID-Tag (410) ein mehrschichtiges Etikett (530) ist, das eine Klebeschicht (532), eine RFID-Einlageschicht (536) und eine Abdeck- oder Polsterschicht (538) umfasst.

## Revendications

1. Procédé permettant le suivi d'informations concernant un palet (14) dans un système sportif intelligent (10), le système sportif intelligent (10) comprenant :
un palet (14) de hockey présentant une carte électronique (24) intégrée dans celui-ci, dans lequel la carte électronique (24) comprend les composants suivants : une unité de traitement (310), une mémoire, une pluralité de capteurs (345) pour détecter un mouvement le long d'un ou de plusieurs axes, et au moins une antenne (26) conçue pour lire des étiquettes RFID (410) ; et
une crosse (430) de hockey présentant une pluralité d'étiquettes RFID (410) associées à celle-ci et disposées le long d'une partie de lame (420) de la crosse (430) de hockey, dans lequel la carte électronique (24) du palet (14) peut lire des informations à partir des étiquettes RFID (410), et
dans lequel la carte électronique (24) est conçue pour présenter un état inactif et un état actif, dans lequel, pendant l'état inactif, seul un sous-ensemble des composants fonctionne ou au moins certains des composants fonctionnent dans un mode à faible énergie,
dans lequel le procédé comprend la commutation de la carte électronique (24) de l'état inactif à l'état actif lorsqu'un événement de déclenchement est détecté, et
dans lequel, pendant l'état actif, la carte électronique (24) est conçue pour activer l'au moins une antenne (26) et balayer, par l'au moins une antenne (26), des étiquettes RFID (410), et lors de l'identification d'une étiquette RFID (410), pour traiter des données de mouvement associées au palet (14) de hockey en lisant une intensité de signal de chacune des étiquettes RFID (410) le long de la partie de lame (420) de la crosse (430) de hockey, et pour analyser les intensités de signal pour déterminer une partie de la partie de lame (420) de la crosse (430) de hockey avec laquelle le palet (14) de hockey a été en contact ; et lors du traitement des données de mouvement, pour revenir à l'état de repos.

2. Procédé de la revendication 1, dans lequel la détection de l'événement de déclenchement comprend la détection d'un changement soudain de mouvement du palet (14) de hockey.

3. Procédé de la revendication 1, comprenant le déclenchement de la carte électronique (24) intégrée dans le palet (14) de hockey pour associer des informations associées à l'étiquette RFID (410) associée aux données de crosse (430) de hockey aux données de mouvement traitées du palet (14) de hockey, à l'occasion du fait que le palet (14) de hockey vient à proximité immédiate de la crosse (430) de hockey.

4. Procédé de la revendication 1, dans lequel les données de mouvement détectées comprennent une ou plusieurs parmi la direction, la vitesse, l'accélération, l'angle, la hauteur et la force d'impact.

5. Système sportif intelligent (10) comprenant un palet (14) de hockey et une crosse (430) de hockey, le palet (14) de hockey présentant une carte électronique (24) intégrée dans celui-ci, dans lequel la carte électronique (24) comprend les composants suivants : une unité de traitement (310), une mémoire, une pluralité de capteurs (345) pour détecter un mouvement le long d'un ou de plusieurs axes, et au moins une antenne (26) conçue pour lire des étiquettes RFID (410) ; et la crosse (430) de hockey présentant une pluralité d'étiquettes RFID (410) associées à celle-ci et disposées le long d'une partie de lame (420) de la crosse (430) de hockey, dans lequel la carte électronique (24) du palet (14) peut lire des informations à partir des étiquettes RFID (410), et dans lequel la carte électronique (24) est conçue pour présenter un état inactif et un état actif, dans lequel, pendant l'état inactif, seul un sous-ensemble des composants fonctionne ou au moins certains des composants fonctionnent dans un mode à faible énergie, dans lequel le système est conçu pour réaliser le procédé de la revendication 1.

6. Système sportif intelligent (10) de la revendication 5, comprenant en outre un dispositif informatique (16) pour recevoir et afficher les données traitées associées au palet (14).

7. Système sportif intelligent (10) de la revendication 5, comprenant en outre un serveur (18) distant ou basé sur le cloud conçu pour recevoir, stocker et traiter des données reçues à partir d'un dispositif informatique (16).

8. Système sportif intelligent (10) de la revendication 5, comprenant en outre une seconde antenne (340) pour transmettre des données de mouvement traitées sans fil à un dispositif informatique (16).

9. Système sportif intelligent (10) de la revendication 5, comprenant en outre une étiquette d'identification (480) disposée sur la crosse (430) de hockey, dans lequel l'étiquette d'identification (480) est conçue pour fournir des informations associées à l'étiquette RFID (410) associée à la crosse (430) de hockey.

10. Système sportif intelligent (10) de la revendication 9, dans lequel l'étiquette d'identification (480) est l'un parmi un code-barres, un code QR ou un code alphanumérique, et dans lequel l'étiquette d'identification peut être balayée par un dispositif informatique (16) et peut associer les informations associées à l'étiquette d'identification (480) à un profil de joueur.

11. Système sportif intelligent (10) de la revendication 5, dans lequel l'étiquette RFID (410) est une étiquette multicouche (530) comprenant une couche adhésive (532), une couche de ferrite (534), une couche d'incrustation RFID (536) et une couche de couverture ou de rembourrage (538).

12. Système sportif intelligent (10) de la revendication 5, dans lequel au moins une étiquette RFID (410) est montée sur une partie avant de la crosse (430) de hockey et au moins une étiquette RFID (410) est située sur une partie arrière de la crosse (430) de hockey.

13. Système sportif intelligent (10) de la revendication 5, dans lequel une couche de ferrite (534) est enduite autour d'une partie de lame (420) de la crosse (430) et l'étiquette RFID (410) est une étiquette multicouche (530) comprenant une couche adhésive (532), une couche d'incrustation RFID (536) et une couche de couverture ou de rembourrage (538).
